# EUROPEAN PATENT SPECIFICATION

(11) **EP 3 982 346 B1**
(45) Date of publication and mention of the grant of the patent: **22.05.2024**
(21) Application number: 21199171.6
(22) Date of filing: 27.09.2021
(51) Int. Cl.: G08G 1/16, B60W 30/09, B60W 30/095, B60W 30/14

(54) **ROAD ENTRY SYSTEM AND METHOD FOR VEHICLE**
STRASSENEINFAHRTSSYSTEM UND -VERFAHREN FÜR EIN FAHRZEUG
SYSTÈME ET PROCÉDÉ D'ENTRÉE DE ROUTE POUR VÉHICULE

(30) Priority: 29.09.2020 KR 20200127081
(43) Date of publication of application: 13.04.2022
(73) Proprietor: Hyundai Mobis Co., Ltd., Gangnam-gu Seoul 06141 (KR)
(72) Inventor: LEE, Hyung Myung, 16224 Gyeonggi-do (KR)
(74) Representative: dompatent von Kreisler Selting Werner - Partnerschaft von Patent- und Rechtsanwälten mbB

(56) References cited:
- DE-A1-102017 221 643
- US-A1- 2017 305 418
- US-A1- 2018 129 206
- US-A1- 2020 283 027

## Description

### BACKGROUND

### Field of the Invention

The present invention relates to a road entry system and method for a vehicle, and more particularly, to a technique for controlling driving of a vehicle according to a traffic condition of an entrance lane.

### Description of the Related Art

Generally, a vehicle is provided with a rear detecting sensor that senses an external obstacle located on a side or a rear of the vehicle.

A conventional rear detecting sensor may generate an alert signal to a driver for an external obstacle located on a side or a rear of a vehicle when the vehicle changes lanes.

With the recent development of autonomous driving vehicles, when the driver shows an intent to change lanes, the vehicle merely determines based on the conventional rear detecting sensor whether lane change is possible within a specific time from this point, and performs the lane change.

However, when the vehicle enters an entrance lane in an entrance zone from a narrow road to a wide road like a zone where the vehicle enters a highway, it is difficult for the vehicle to detect an external vehicle on the entrance lane through the rear detecting sensor, resulting in collision between the external vehicle on the entrance lane and the vehicle. US 2018/0129206 A1 discloses road entry system of a vehicle with the features of the preamble of claim 1. DE 10 2017 221643 A1, US 2017/305418 A1 and US 2020/283027 A1 disclose further driving assistance devices.

The matters described as the background art are merely for improving the understanding of the background of the present invention, and should not be accepted as acknowledging that they correspond to the prior art known to those of ordinary skill in the art.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A road entry system of a vehicle according to the present invention is defined by the features of claim 1.

The sensing unit may be further configured to sense the position information or the movement information of the external obstacle by being connected to a camera sensor or a radar sensor mounted on the vehicle.

The sensing unit may be further configured to sense the position information or the movement information of the external obstacle by being connected to an infrastructure or an external vehicle that provides traffic information of the entrance lane via wireless communication.

The sensing unit is further configured to sense the position information or the movement information of the external obstacle through a camera sensor or a radar sensor, or sense the position information or the movement information of the external obstacle by being connected to an infrastructure or an external vehicle that provides traffic information of the entrance lane via wireless communication. The determining unit is further configured to set a vehicle collision index calculated by numerically calculating the possibility of collision between the vehicle and the external obstacle based on the position information or the movement information of the external obstacle, as sensed by the sensing unit from the camera sensor, the radar sensor, the infrastructure, or the external vehicle.

In an aspect, which is not part of the claims, the determining unit, when setting the vehicle collision index based on a connection state of wireless communication with the infrastructure or the external vehicle, a sensing state of the camera sensor or the radar sensor, or a position state of the external obstacle, may set a weight value for information of the external obstacle, as sensed by the sensor camera sensor or the radar sensor, or information of the external obstacle, as transmitted via wireless communication.

The determining unit is further configured to determine that the entrance lane is congested, in response to the vehicle collision index being greater than or equal to a preset value.

The sensing unit is further configured to sense the position information or the movement information of the external obstacle, in response to the determining unit determining that the entrance lane is congested after the vehicle enters the entrance lane. The determining unit may be further configured to determine a traffic condition of a side lane based on the position information or the movement information of the external obstacle, as sensed by the sensing unit, the side lane being a lane, the vehicle needs to move to in order to leave the congested entrance lane.

The control unit is further configured to control driving of the vehicle such that the vehicle enters the side lane while increasing a moving speed of the vehicle based on the position information or the movement information of the external obstacle, as sensed by the sensing unit.

The road entry system may further include a navigation configured to set a driving path of the vehicle. The navigation may be further configured to set a detour path where a traffic condition of the side lane is smooth, in response to the determining unit determining that the traffic condition of the side lane is congested. The control unit may be further configured to control driving of the vehicle based on the detour path.

A road entry system of a vehicle according to the present invention is defined by the features of claim 2.

The sensing of the position information or the movement information may include sensing the position information or the movement information by using a camera sensor or a radar sensor mounted on the vehicle.

The sensing of the position information or the movement information may include sensing the position information or the movement information by using an infrastructure or an external vehicle that provides traffic information of the entrance lane via wireless communication.

The sensing of the position information or the movement information includes sensing the position information or the movement information by using a camera sensor or a radar sensor, or sensing the position information or the movement information by using an infrastructure or an external vehicle that provides traffic information of the entrance lane via wireless communication. The determining of whether the entrance lane is congested includes setting a vehicle collision index calculated by numerically calculating the possibility of collision between the vehicle and the external obstacle based on the position information or the movement information of the external obstacle, as sensed from the camera sensor, the radar sensor, the infrastructure, or the external vehicle.

In an aspect, which is not part of the claims, the determining of whether the entrance lane is congested may include, when setting the vehicle collision index based on a connection state of wireless communication with the infrastructure or the external vehicle, a sensing state of the camera sensor or the radar sensor, or a position state of the external obstacle, setting a weight value for information of the external obstacle, as sensed by the camera sensor or the radar sensor, or information of the external obstacle, as transmitted via wireless communication.

The determining of whether the entrance lane is congested includes determining that the entrance lane is congested, in response to the vehicle collision index being greater than or equal to a preset value. The controlling of the driving of the vehicle includes limiting a moving speed of the vehicle when the vehicle enters the entrance lane, in response to determining that the entrance lane is congested.

The road entry method further includes sensing the position information or the movement information of the external obstacle, in response to determining that the entrance lane is congested after the vehicle enters the entrance lane, and determining a traffic condition of a side lane based on the position information or the movement information of the external obstacle on the side lane, the side lane being a lane, the vehicle needs to move to in order to leave the congested entrance lane.

The road entry method further includes controlling driving of the vehicle such that the vehicle enters the side lane while increasing the speed of the vehicle based on the position information or the movement information of the external obstacle, as sensed in the determining of the traffic condition of the side lane, in response to determining that the traffic condition of the side lane is smooth.

The road entry method may further include: setting a detour route by using a navigation that sets a driving path of the vehicle, in response to determining that the traffic condition of the side lane is congested; and controlling driving of the vehicle based on the detour path.

A non-transitory computer-readable storage medium, as defined in claim 3, stores instructions that, when executed by a processor, cause the processor to perform the method described above.

Other features and aspects will be apparent from the following detailed description, the drawings, and the claims.

### BRIEF DESCRIPTION OF THE DRAWINGS

FIG. 1 is a block diagram of a road entry system of a vehicle, according to an embodiment of the present invention;
FIG. 2 shows sensing of an external vehicle when a vehicle enters an entrance lane in a road entry system of the vehicle according to an embodiment of the present invention;
FIGS. 3 and 4 show sensing of an external vehicle on a side lane after a vehicle enters an entrance lane, in a road entry system of the vehicle according to an embodiment of the present invention; and
FIG. 5 is a flowchart of a road entry method of a vehicle, according to an embodiment of the present invention.
   entrance lane, in a road entry system of the vehicle according to an embodiment of the present invention; and

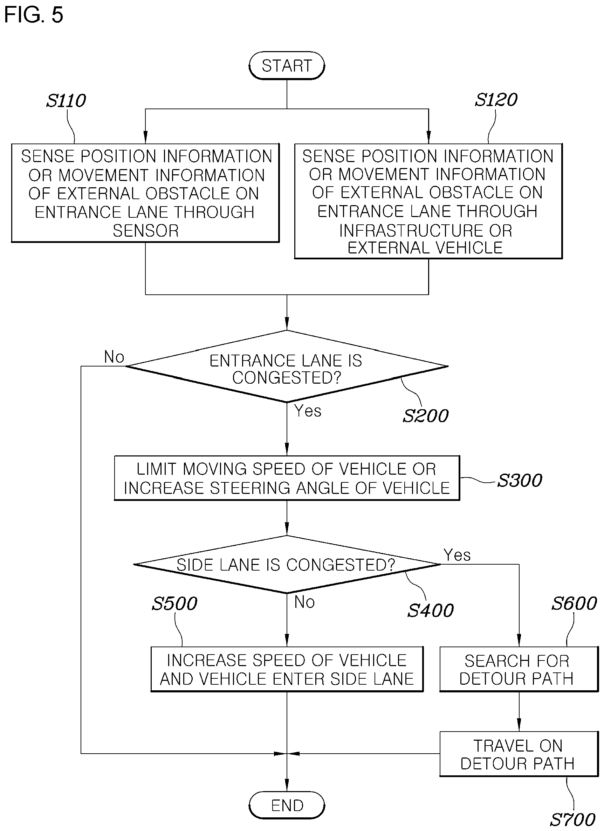

FIG. 5 is a flowchart of a road entry method of a vehicle, according to an embodiment of the present invention.

### DETAILED DESCRIPTION

For embodiments of the present invention disclosed in the present specification or application, specific structural or functional descriptions are only exemplified for the purpose of describing the embodiments of the present invention, and the embodiments of the present invention may be implemented in various forms, and should not be construed as being limited to the embodiments described in the present specification or application.

Since an embodiment according to the present invention may have various changes and may have various forms, specific embodiments will be illustrated in the drawings and described in detail in the present specification or application. However, such a description is not construed as limiting an embodiment according to the concept of the present invention to a specified disclosure, and should be understood as including all changes, equivalents, or substitutes included in the spirit and technical scope of the present invention.

Terms such as first and/or second, etc., may be used to describe various components, but the components should not be limited to those terms. The terms are used only for the purpose of distinguishing one component from another component, for example, without departing from the scope of the present invention, a first component may be referred to as a second component, and similarly, the second component may also be referred to as the first component.

When a component is referred to as being "connected" or "accessed" to or by any other component, it should be understood that the component may be directly connected or accessed by the other component, but another new component may also be interposed between them. Contrarily, when a component is referred to as being "directly connected" or "directly joined" to or by any other component, it should be understood that there is no component between the component and the other component. Other expressions describing a relationship between components, that is, "between" and "immediately between", "adjacent to" and "directly adjacent to", etc., should be interpreted similarly.

The terms used in the present specification are used for the purpose of describing particular exemplary embodiments only and are not intended to be limiting. As used herein, the singular forms are intended to include the plural forms as well, unless the context clearly indicates otherwise. In the present specification, it will be further understood that the terms "comprises" and/or "has," specify the presence of feature, number, step, operation, component, element, or combination thereof, but do not preclude the presence or addition of one or more other features, numbers, steps, operations, components, elements, or combinations thereof.

All of the terms used herein including technical or scientific terms have the same meanings as those generally understood by an ordinary skilled person in the related art unless they are defined otherwise. The terms defined in a generally used dictionary should be interpreted as having the same meanings as the contextual meanings of the relevant technology and should not be interpreted as having ideal or exaggerated meanings unless they are clearly defined in the present specification.

Hereinafter, preferred embodiments of the present invention will be described in detail with reference to the accompanying drawings. Like reference numerals indicated in the drawings refer to like members.

A sensing unit 10, a determining unit 20, and a control unit 30 according to an exemplary embodiment of the present invention may be implemented through non-volatile memory (not shown) configured to store data regarding an algorithm for controlling operations of various components of a vehicle or software instructions for reproducing the algorithm and a processor (not shown) configured to perform operations described below by using the data stored in the memory. Herein, the memory and the processor may be implemented as separate chips. Alternatively, the memory and the processor may be implemented as an integrated single chip. The processor may have a form of one or more processors.

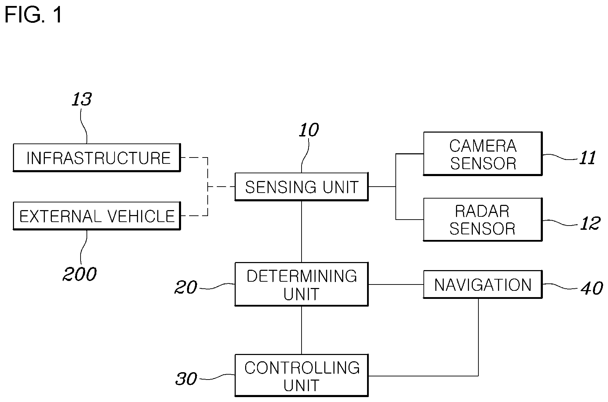

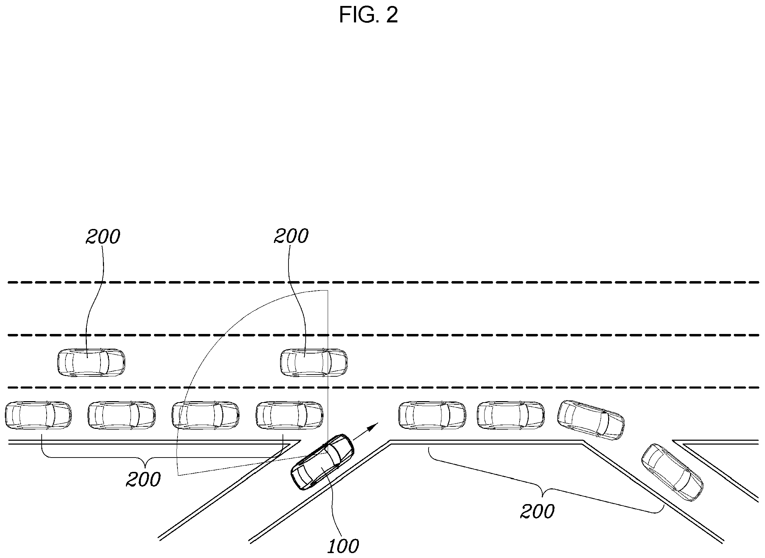

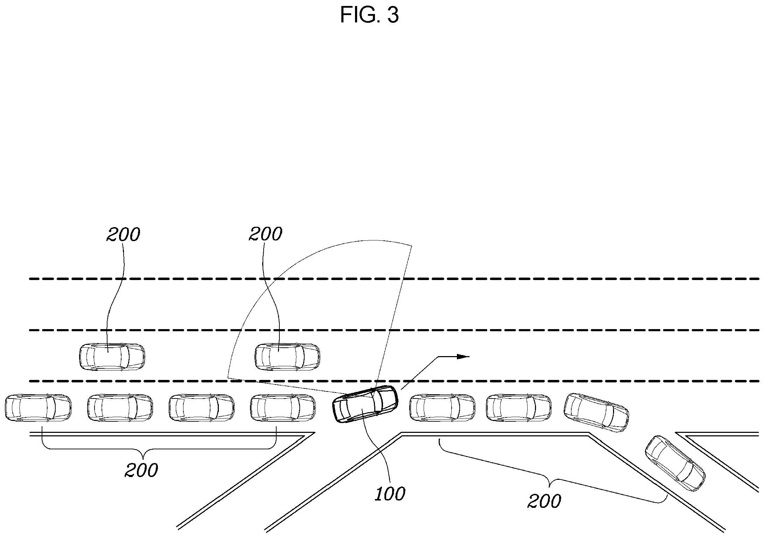

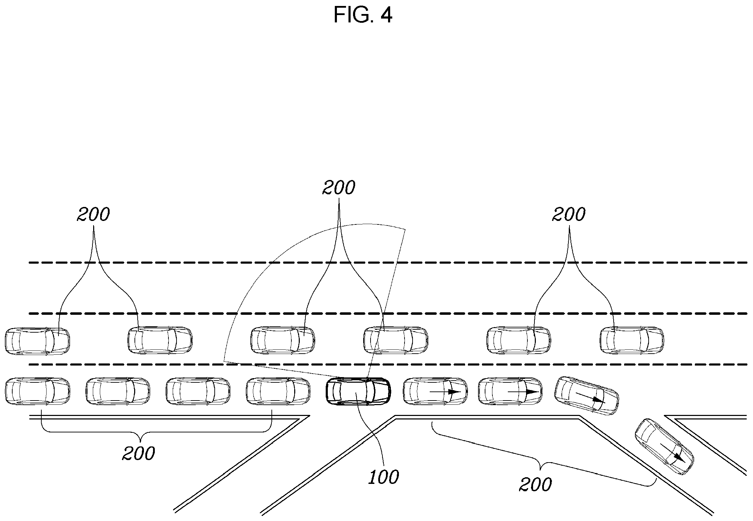

FIG. 1 is a structural diagram of a road entry system of a vehicle 100 according to an embodiment of the present invention, FIG. 2 shows sensing of an external obstacle 200 when the vehicle 100 enters an entrance lane, in a road entry system of the vehicle 100 according to an embodiment of the present invention, and FIGS. 3 and 4 sensing of the external obstacle 200 on a side lane after the vehicle 100 enters the entrance lane, in the road entry system of the vehicle 100.

With reference to FIGS. 1 through 4 attached, a preferred embodiment of the road entry system of the vehicle 100 according to the present invention will be described below.

The road entry system of the vehicle 100 according to the present invention has been developed to allow the vehicle 100 to safely enter an entrance lane by sensing an external obstacle 200 such as an external vehicle or a motorcycle located on an entrance lane in a section where the vehicle 100 enters a main road such as a highway and to change lanes when the entrance lane is congested.

The road entry system of the vehicle 100 according to the present invention may be applied to an autonomous driving vehicle 100 and may also be applied to a general vehicle 100 to assist driving of a driver.

The road entry system of the vehicle 100 according to the present invention includes a sensing unit 10 that senses position information or movement information of the external obstacle 200 located on a side or read of the vehicle 100, a determining unit 20 that determines based on the position information or the movement information of the external obstacle 200, sensed by the sensing unit 10, whether the entrance lane is congested, and a control unit 30 that controls driving of the vehicle 100 based whether the entrance lane is congested, determined by the determining unit 20.

As shown in FIG. 1, the sensing unit 10 senses the external obstacle 200 located on the side or the rear when the vehicle 100 enters the entrance lane, and senses position information regarding a distance between the external obstacle 200 and the vehicle 100 or movement information regarding a relative speed between the external obstacle 200 and the vehicle 100.

The determining unit 20 determines whether the entrance lane is congested, from the position information of the external obstacle 200, sensed by the sensing unit 10, or from the number and a speed of the external obstacle 200 located on the entrance lane, identified based on the position information.

As shown in FIG. 2, according to an embodiment, when the vehicle 100 enters the entrance lane, the sensing unit 10 senses the external obstacle 200 and determine whether the entrance lane is congested.

The control unit 30 controls driving of the vehicle 100, such as a speed or a steering angle of the vehicle 100, based on whether the entrance lane is congested, determined by the determining unit 20, when the vehicle 100 enters the entrance lane.

According to the claimed invention, when the determining unit 20 determines that the entrance lane is congested, the control unit 30 reduces the speed of the vehicle 100 for entrance between a plurality of external obstacles 200 congested.

In another embodiment, which is not part of the claims, when the determining unit 20 determines that the entrance lane is not congested, the control unit 30 may cause the vehicle 100 to enter the entrance lane by controlling the speed of the vehicle 100 based on the movement information of the external obstacle 200 on the entrance lane.

In this way, the vehicle 100 may safely enter the entrance lane when entering the entrance lane.

The sensing unit 10 may be connected to the camera sensor 11 or the radar sensor 12 mounted on the vehicle 100 to sense the position information or the movement information of the external obstacle 200 located on the side or the rear of the vehicle 100.

The sensing unit 10 may sense the external obstacle 200 by being connected to the camera sensor 11 or the radar sensor 12 mounted on the vehicle 100 to sense the external obstacle 200 located on the side or the rear of the vehicle 100, and a sensor connected to the sensing unit 10 may further include an ultrasonic sensor or a lidar sensor as well the camera sensor 11 and the radar sensor 12 described above.

The camera sensor 11 may capture the external obstacle 200 and sense position information from an image obtained by capturing the external obstacle 200, and the radar sensor 12 may sense the position information or the movement information of the external obstacle 200 with electromagnetic waves.

The sensing unit 10 may be connected to an infrastructure 13 or the external obstacle 200, which provides traffic information of the entrance lane of the vehicle 100, via wireless communication to sense the position information or the movement information of the external obstacle 200 located on the side or the rear of the vehicle 100.

The sensing unit 10 may be provided with the traffic information of the entrance lane by being connected to the infrastructure 13 or a plurality of external obstacles 200 providing road traffic information of a road where the entrance lane is located to sense the external obstacle 200 via wireless communication, and may sense the external obstacle 200 located on the entrance lane from the traffic information.

The sensing unit 10 may accurately sense the position information or the movement information of the external obstacle 200, based on sensing information obtained through the sensor mounted on the vehicle 100 and the traffic information received from the infrastructure 13 or the external obstacle 200 connected via wireless communication.

The sensing unit 10 senses the position information or the movement information of the external obstacle 200 through the camera sensor 11 or the radar sensor 12 or sense the position information or the movement information of the external obstacle 200 by being connected to the infrastructure 13 or the external obstacle 200 via wireless communication, and the determining unit 20 sets a vehicle collision index based on the position information or the movement information of the external obstacle 200 sensed by the sensing unit 10 from the camera sensor 11, the radar sensor 12, the infrastructure 13, or the external obstacle 200.

The determining unit 20 sets the vehicle collision index calculated by numerically calculating the possibility of collision between the vehicle 100 and the external obstacle 200 based on the position information or the movement information of the external obstacle 200, sensed by the sensing unit 10.

The vehicle collision index may be set high when the entrance lane is congested due to a large number of external obstacles 200 on the entrance lane, and may be set low when the entrance is not congested.

In one embodiment, which is not part of the claims, when the determining unit 20 sets the vehicle collision index based on a connection state of wireless communication with the infrastructure 13 or the external obstacle 200, a sensing state of the sensor, or a position state of the external obstacle 200, the determining unit 20 may set a weight value for information of the external obstacle 200, sensed by the sensor, or information of the external obstacle 200, transmitted via wireless communication.

The determining unit 20 may set the vehicle collision index based on the sensing information of the sensor or the traffic information received from the infrastructure 13 or the external obstacle 200 connected via wireless communication.

In this case, the determining unit 20 may set a weight value for the sensing information of the sensor or the traffic information received from the infrastructure 13 or the external obstacle 200, based on the connection state of wireless communication or the sensing state of the sensor.

It may become difficult to receive the traffic information from the infrastructure 13 or the external obstacle 200 when the connection state of wireless communication is not good, the sensor may not be able to accurately sense the external obstacle 200 due to an external weather condition or a foreign substance on the sensor, and the traffic condition of the entrance lane may be difficult to accurately sense when a position of the external obstacle 200 is out of a sensing range of the sensor.

Thus, the determining unit 20 may set the vehicle collision index by giving a weight value to the traffic information received from the infrastructure 13 or the external obstacle 200 connected via wireless communication in a situation where the external obstacle 200 is difficult to sense through the sensor, and may set the vehicle collision index by giving a weight value to the sensing information of the sensor in a situation where the traffic information is difficult to receive from the infrastructure 13 or the external obstacle 200 connected via wireless communication.

The determining unit 20 determines that the entrance lane is congested when the vehicle collision index is greater than or equal to a preset value, and when the determining unit 20 determines that the entrance lane is congested, the control unit 30 limits a moving speed of the vehicle 100 when the vehicle 100 enters the entrance lane.

The determining unit 20 sets the vehicle collision index for the entrance lane, and determines that the entrance lane is congested when the vehicle collision index is greater than or equal to a preset value.

The control unit 30 controls driving of the vehicle 100 such that the control unit 30 limits the speed of the vehicle 100 to a preset speed or less to allow the vehicle 100 to safely enter the entrance lane when the vehicle 100 enters the entrance lane to allow the vehicle 100 to enter the entrance lane among the plurality of external obstacles 200 when the vehicle 100 enters the entrance lane.

When the determining unit 20 determines that the entrance lane is congested after the vehicle 100 enters the entrance lane, the sensing unit 10 senses the position information or the movement information of the external obstacle 200 on the side or the rear, and the determining unit 20 determines a traffic condition of a side lane based on the position information or the movement information of the external obstacle 200 on the side or the rear, sensed by the sensing unit 10.

After the determining unit 20 determines that the entrance lane is congested and the vehicle 100 enters the entrance lane, the vehicle 100 needs to move to the side lane to leave a congested section.

To this end, the sensing unit 10 senses the position information or the movement information of the external obstacle 200 located on the side lane, and the determining unit 20 determines a traffic condition of the side lane based on the position information or the movement information of the external obstacle 200, sensed by the sensing unit 10.

In this way, the vehicle 100 recognizes the traffic condition of the side lane to leave the congested section.

When the determining unit 20 determines that the traffic condition of the side lane is smooth, the control unit 30 controls driving of the vehicle 100 to allow the vehicle 100 to enter the side lane while increasing the speed of the vehicle 100 based on the position information or the movement information of the external obstacle 200 located on the side or the rear of the vehicle 100, sensed by the sensing unit 10.

When the determining unit 20 determines that the traffic condition of the side lane is smooth, the control unit 30 may move the vehicle 100 to the side lane when the external obstacle 200 is not located on the side or the rear of the vehicle 100, based on position information of the external obstacle 200 located on the side lane, or the control unit 30 may move the vehicle 100 to the side lane while increasing the speed of the vehicle 100 to a speed that is similar to the speed of the external obstacle 200, based on the movement information of the external obstacle 200 located on the side lane.

The road entry system may further include a navigation 40 that sets a driving path, and when the determining unit 20 determines that the traffic condition of the side lane is congested, the navigation 40 may set a detour path where a traffic condition is smooth, and the control unit 30 may control driving of the vehicle 100 based on the detour path set by the navigation 40.

As shown in FIG. 4, when the determining unit 20 determines that both the entrance lane and the side lane are congested, the navigation 40 may search for a detour path where a traffic condition is smooth, instead of the current path, and the control unit 30 may control driving of the vehicle 100 according to the detour path found in the navigation 40.

FIG. 5 is a flowchart of a road entry method of the vehicle 100, according to an embodiment of the present invention.

With reference to FIG. 5, a preferred embodiment of the road entry method of the vehicle 100 according to the present invention will be described below.

The road entry method of the vehicle 100 according to the present invention includes sensing operation S100 of sensing position information or movement information of the external obstacle 200 located on a side or read of the vehicle 100, determining operation S200 of determining based on the position information or the movement information of the extemal obstacle 200, sensed in sensing operation S100, whether an entrance lane is congested, and control operation S300 of controlling driving of the vehicle 100 based on whether the entrance lane is congested, determined in determining operation S200.

Sensing operation S100 may include operation S110 of sensing the position information or the movement information of the external obstacle 200 located on the side or the rear of the vehicle 100 by being connected to a camera sensor or a radar sensor mounted on the vehicle 100.

Sensing operation S100 may further include operation S120 of sensing the position information or the movement information of the external obstacle 200 located on the side or the rear of the vehicle 100 by being connected to an infrastructure or an external vehicle providing traffic information of the entrance lane of the vehicle 100 via wireless communication.

Sensing operation S100 includes sensing the position information or the movement information of the external obstacle 200 through the camera sensor or the radar sensor or sensing the position information or the movement information of the external obstacle 200 by being connected to the infrastructure or the external vehicle via wireless communication, and determining operation S200 includes setting a vehicle collision index based on the position information or the movement information of the external obstacle 200 sensed in sensing operation S100 from the camera sensor, the radar sensor, the infrastructure, or the external vehicle.

In one embodiment, which is not part of the claims, determining operation S200 may include, when setting the vehicle collision index based on a connection state of wireless communication with the infrastructure or the external vehicle, a sensing state of the sensor, or a position state of the external obstacle 200, setting a weight value for information of the external obstacle 200, sensed by the sensor, or information of the external obstacle 200, transmitted via wireless communication.

Determining operation S200 includes determining that the entrance lane is congested when the vehicle collision index is greater than or equal to a preset value, and control operation S300 includes, when determining that the entrance lane is congested, limiting a moving speed of the vehicle 100 or controlling to increase the steering angle when the vehicle 100 enters the entrance lane.

The road entry method of the vehicle 100 according to the present invention further includes operation S400 of sensing the position information or the movement information of the external obstacle 200 when determining that the entrance lane is congested after the vehicle 100 enters the entrance lane and determining a traffic condition of a side lane based on the position information or the movement information of the external obstacle 200 on the side lane.

The road entry method of the vehicle 100 according to the present invention further includes operation S500 of, when determining that the traffic condition of the side lane is smooth in the operation of determining the traffic condition of the side lane, controlling driving of the vehicle 100 to cause the vehicle 100 to enter the side lane while increasing the speed of the vehicle 100 based on the position information or the movement information of the external obstacle 200 located on the side or the rear of the vehicle 100, sensed in the operation of determining the traffic condition of the side lane.

The navigation 40 for setting a driving path of the vehicle 100 is further provided, and the road entry method may further include operation S600 where the navigation 40 sets a detour path when determining that the traffic condition of the side lane is congested in the operation of determining the traffic condition of the side lane, and operation S700 of controlling driving of the vehicle 100 based on the detour path set by the navigation 40. path set by the navigation 40.

While the present invention has been shown and described in relation to specific embodiments thereof, it would be obvious to those of ordinary skill in the art that the present invention can be variously improved and changed without departing from the scope of protection of the present invention provided by the following claims.

## Claims

1. A road entry system of a vehicle (100), comprising:
a sensing unit (10) configured to sense position information or movement information of an external obstacle (200) located on a side or a rear of the vehicle (100), in response to the vehicle (100) entering an entrance lane in an entrance zone from a narrow road to a wide road;
wherein the sensing unit (10) is further configured to sense the position information or the movement information of the external obstacle (200) through a camera sensor (11) or a radar sensor (12), or sense the position information or the movement information of the external obstacle (200) by being connected to an infrastructure (13) or an external vehicle that provides traffic information of the entrance lane via wireless communication;
a determining unit (20) configured to set a vehicle collision index calculated by numerically calculating the possibility of collision between the vehicle (100) and the external obstacle (200) based on the position information or the movement information of the external obstacle (200), and to determine that the entrance lane is congested in response to the vehicle collision index being greater than or equal to a preset value; and
a control unit (30) configured to control driving of the vehicle (100) based on a result of the determining of whether the entrance lane is congested, wherein the control unit (30) is further configured to limit a moving speed of the vehicle (100) when the vehicle (100) enters the entrance lane, in response to the determining unit (20) determining that the entrance lane is congested;
**characterized in that**,
the sensing unit (10) is further configured to sense the position information or the movement information of the external obstacle (200) located on the side lane, in response to the determining unit determining that the entrance lane is congested after the vehicle enters the entrance lane, the determining unit (20) is further configured to determine a traffic condition of a side lane based on the position information or the movement information of the external obstacle (200), as sensed by the sensing unit (10); and
the control unit (30) is further configured to control driving of the vehicle (100) such that the vehicle (100) enters the side lane while increasing a moving speed of the vehicle (100) based on the position information or the movement information of the external obstacle (200), as sensed by the sensing unit (10), in response to determining that the traffic condition of the side lane is smooth.

2. A road entry method of a vehicle (100), comprising:
sensing position information or movement information of an external obstacle (200) located on a side or a rear of the vehicle (100), in response to the vehicle (100) entering an entrance lane in an entrance zone from a narrow road to a wide road, wherein the sensing of the position information or the movement information comprises sensing the position information or the movement information by using a camera sensor (11) or a radar sensor (12), or sensing the position information or the movement information by using an infrastructure (13) or an external vehicle that provides traffic information of the entrance lane via wireless communication;
determining whether the entrance lane is congested, comprising setting a vehicle collision index calculated by numerically calculating the possibility of collision between the vehicle (100) and the external obstacle (200) based on the position information or the movement information of the external obstacle (200), as sensed from the camera sensor (11), the radar sensor (12), the infrastructure (13), or the external vehicle and determining that the entrance lane is congested, in response to the vehicle collision index being greater than or equal to a preset value; and
controlling driving of the vehicle (100) based on a result of the determining of whether the entrance lane is congested, wherein the controlling of the driving of the vehicle (100) further comprises limiting a moving speed of the vehicle (100) when the vehicle (100) enters the entrance lane, in response to determining that the entrance lane is congested;
**characterized by**,
sensing the position information or the movement information of the external obstacle (200) located on the side lane, in response to determining that the entrance lane is congested after the vehicle (100) enters the entrance lane,
and determining a traffic condition of a side lane based on the position information or the movement information of the external obstacle (200) on the side lane; and
controlling driving of the vehicle (100) such that the vehicle (100) enters the side lane while increasing the speed of the vehicle (100) based on the position information or the movement information of the external obstacle (200), as sensed in the determining of the traffic condition of the side lane, in response to determining that the traffic condition of the side lane is smooth.

3. A non-transitory computer-readable storage medium storing instructions that, when executed by a processor, cause the processor to perform the method of claim 2.

## Patentansprüche

1. Fahrbahneinfahrtssystem eines Fahrzeugs (100), das aufweist:
eine Sensiereinheit (10), die dazu ausgebildet ist, Positionsinformationen oder Bewegungsinformationen eines externen Hindernisses (200) zu sensieren, das sich seitlich eines oder hinter dem Fahrzeug (100) befindet, als Reaktion auf das Einfahren des Fahrzeugs (100) in eine Einfahrtsspur in einer Einfahrtszone von einer schmalen Fahrbahn zu einer breiten Fahrbahn;
wobei die Sensiereinheit (10) ferner dazu ausgebildet ist, die Positionsinformationen oder die Bewegungsinformationen des externen Hindernisses (200) über einen Kamerasensor (11) oder einen Radarsensor (12) zu sensieren, oder die Positionsinformationen oder die Bewegungsinformationen des externen Hindernisses (200) zu sensieren, indem sie mit einer Infrastruktur (13) oder einem externen Fahrzeug verbunden ist, das Verkehrsinformationen der Einfahrtsspur über drahtlose Kommunikation liefert;
eine Bestimmungseinheit (20), die dazu ausgebildet ist, einen Fahrzeugkollisionsindex festzulegen, der durch numerische Berechnung der Wahrscheinlichkeit einer Kollision zwischen dem Fahrzeug (100) und dem externen Hindernis (200) basierend auf den Positionsinformationen oder den Bewegungsinformationen des externen Hindernisses (200) berechnet wird, und als Reaktion darauf, dass der Fahrzeugkollisionsindex größer als ein oder gleich einem vorbestimmten Wert ist, zu bestimmen, dass die Einfahrtsspur überfüllt ist; und
eine Steuereinheit (30), die dazu ausgebildet ist, das Fahren des Fahrzeugs (100) basierend auf einem Ergebnis der Bestimmung, ob Einfahrtsspur überfüllt ist, zu steuern, wobei die Steuereinheit (30) ferner dazu ausgebildet ist, eine Bewegungsgeschwindigkeit des Fahrzeugs (100) zu begrenzen, wenn das Fahrzeug (100) in eine Einfahrtsspur einfährt, als Reaktion darauf, dass die Bestimmungseinheit (20) bestimmt, dass die Einfahrtsspur überfüllt ist;
**dadurch gekennzeichnet, dass**
die Sensiereinheit (10) ferner dazu ausgebildet ist, die Positionsinformationen oder die Bewegungsinformationen des externen Hindernisses (200) zu sensieren, das sich auf dem Fahrstreifen befindet, als Reaktion darauf, dass die Bestimmungseinheit bestimmt, dass die Einfahrtsspur überfüllt ist, nachdem das Fahrzeug in die Einfahrtsspur eingefahren ist, wobei die Bestimmungseinheit (20) ferner dazu ausgebildet ist, eine Verkehrslage eines Fahrstreifens basierend auf den Positionsinformationen oder den Bewegungsinformationen des externen Hindernisses (200) zu bestimmen, wie durch die Sensiereinheit (10) sensiert; und
die Steuereinheit (30) ferner dazu ausgebildet ist, das Fahren des Fahrzeugs (100) so zu steuern, dass das Fahrzeug (100) in den Fahrstreifen einfährt, während eine Bewegungsgeschwindigkeit des Fahrzeugs (100) basierend auf den Positionsinformationen oder den Bewegungsinformationen des externen Hindernisses (200) zunimmt, wie durch die Sensiereinheit (10) sensiert, als Reaktion auf das Bestimmen, dass die Verkehrslage des Fahrstreifens flüssig ist.

2. Fahrbahneinfahrtsverfahren eines Fahrzeugs (100), das umfasst:
Sensieren von Positionsinformationen oder Bewegungsinformationen eines externen Hindernisses (200), das sich seitlich oder hinter dem Fahrzeug (100) befindet, als Reaktion auf das Einfahren des Fahrzeugs (100) in eine Einfahrtsspur in einer Einfahrtszone von einer schmalen Fahrbahn zu einer breiten Fahrbahn, wobei das Sensieren der Positionsinformationen oder der Bewegungsinformationen das Sensieren der Positionsinformationen oder der Bewegungsinformationen mittels eines Kamerasensors (11) oder eines Radarsensors (12) umfasst, oder das Sensieren der Positionsinformationen oder der Bewegungsinformationen mittels einer Infrastruktur (13) oder eines externen Fahrzeugs umfasst, das Verkehrsinformationen der Einfahrtsspur über drahtlose Kommunikation liefert;
Bestimmen, ob die Einfahrtsspur überfüllt ist, was das Festlegen eines Fahrzeugkollisionsindex umfasst, der durch numerische Berechnung der Wahrscheinlichkeit einer Kollision zwischen dem Fahrzeug (100) und dem externen Hindernis (200) basierend auf den Positionsinformationen oder den Bewegungsinformationen des externen Hindernisses (200) berechnet wird, wie durch den Kamerasensor (11), den Radarsensor (12), die Infrastruktur (13) oder das externe Fahrzeug sensiert, und als Reaktion darauf, dass der Fahrzeugkollisionsindex größer als ein oder gleich einem vorbestimmten Wert ist, das Bestimmen, dass die Einfahrtsspur überfüllt ist; und
Steuern des Fahrens des Fahrzeugs (100) basierend auf einem Ergebnis des Bestimmens, ob die Einfahrtsspur überfüllt ist, wobei das Steuern des Fahrens des Fahrzeugs (100) ferner das Begrenzen einer Bewegungsgeschwindigkeit des Fahrzeugs (100) umfasst, wenn das Fahrzeug (100) in die Einfahrtsspur einfährt, als Reaktion auf das Bestimmen, dass die Einfahrtsspur überfüllt ist;
**gekennzeichnet durch**
Sensieren der Positionsinformationen oder der Bewegungsinformationen des externen Hindernisses (200), das sich auf dem Fahrstreifen befindet, als Reaktion auf das Bestimmen, dass die Einfahrtsspur überfüllt ist, nachdem das Fahrzeug (100) in die Einfahrtsspur eingefahren ist, und Bestimmen einer Verkehrslage eines Fahrstreifens basierend auf den Positionsinformationen oder den Bewegungsinformationen des externen Hindernisses (200) auf dem Fahrstreifen; und
Steuern des Fahrens des Fahrzeugs (100), so dass das Fahrzeug (100) in den Fahrstreifen einfährt, während die Geschwindigkeit des Fahrzeugs (100) basierend auf den Positionsinformationen oder den Bewegungsinformationen des externen Hindernisses (200) zunimmt, wie beim Bestimmen der Verkehrslage auf dem Fahrstreifen sensiert, als Reaktion auf das Bestimmen, dass die Verkehrslage des Fahrstreifens flüssig ist.

3. Nichtflüchtiges computerlesbares Speichermedium, auf dem Anweisungen gespeichert sind, die bei Ausführung durch einen Prozessor bewirken, dass der Prozessor das Verfahren nach Anspruch 2 durchführt.

## Revendications

1. Système d'entrée de route d'un véhicule (100), comprenant :
une unité de détection (10) configurée pour détecter des informations de position ou des informations de mouvement d'un obstacle extérieur (200) situé sur un côté ou un arrière du véhicule (100), en réponse au fait que le véhicule (100) s'engage sur une voie d'entrée dans une zone d'entrée d'une route étroite à une route large ;
dans lequel l'unité de détection (10) est en outre configurée pour détecter les informations de position ou les informations de mouvement de l'obstacle extérieur (200) par l'intermédiaire d'un capteur de caméra (11) ou d'un capteur radar (12), ou pour détecter les informations de position ou les informations de mouvement de l'obstacle extérieur (200) en étant connectée à une infrastructure (13) ou à un véhicule extérieur qui fournit des informations de circulation de la voie d'entrée via une communication sans fil ;
une unité de détermination (20) configurée pour définir un indice de collision de véhicule calculé en calculant numériquement la possibilité de collision entre le véhicule (100) et l'obstacle extérieur (200) d'après les informations de position ou les informations de mouvement de l'obstacle extérieur (200), et pour déterminer que la voie d'entrée est encombrée en réponse au fait que l'indice de collision de véhicule est supérieur ou égal à une valeur prédéfinie ;
et
une unité de commande (30) configurée pour commander une conduite du véhicule (100) d'après un résultat de la détermination de l'encombrement ou non de la voie d'entrée, dans lequel l'unité de commande (30) est en outre configurée pour limiter une vitesse de déplacement du véhicule (100) lorsque le véhicule (100) s'engage sur la voie d'entrée, en réponse à la détermination par l'unité de détermination (20) que la voie d'entrée est encombrée ;
**caractérisé en ce que**,
l'unité de détection (10) est en outre configurée pour détecter les informations de position ou les informations de mouvement de l'obstacle extérieur (200) situé sur la voie latérale, en réponse à la détermination par l'unité de détermination que la voie d'entrée est encombrée après que le véhicule s'engage sur la voie d'entrée, l'unité de détermination (20) est en outre configurée pour déterminer une condition de circulation d'une voie latérale d'après les informations de position ou les informations de mouvement de l'obstacle extérieur (200), telles que détectées par l'unité de détection (10) ; et
l'unité de commande (30) est en outre configurée pour commander une conduite du véhicule (100) de sorte que le véhicule (100) s'engage sur la voie latérale tout en augmentant une vitesse de déplacement du véhicule (100) d'après les informations de position ou les informations de mouvement de l'obstacle extérieur (200), telles que détectées par l'unité de détection (10), en réponse à la détermination que la condition de circulation de la voie latérale est fluide.

2. Procédé d'entrée de route d'un véhicule (100), comprenant :
la détection d'informations de position ou d'informations de mouvement d'un obstacle extérieur (200) situé sur un côté ou un arrière du véhicule (100), en réponse au fait que le véhicule (100) s'engage sur une voie d'entrée dans une zone d'entrée d'une route étroite à une route large, dans lequel la détection des informations de position ou des informations de mouvement comprend la détection des informations de position ou des informations de mouvement à l'aide d'un capteur de caméra (11) ou d'un capteur radar (12), ou la détection des informations de position ou des informations de mouvement à l'aide d'une infrastructure (13) ou d'un véhicule extérieur qui fournit des informations de trafic de la voie d'entrée via une communication sans fil ;
la détermination pour savoir si la voie d'entrée est encombrée, comprenant la définition d'un indice de collision de véhicule calculé en calculant numériquement la possibilité de collision entre le véhicule (100) et l'obstacle extérieur (200) d'après les informations de position ou les informations de mouvement de l'obstacle extérieur (200), telles que détectées par le capteur de caméra (11), le capteur radar (12), l'infrastructure (13), ou le véhicule extérieur et la détermination que la voie d'entrée est encombrée, en réponse au fait que l'indice de collision de véhicule est supérieur ou égal à une valeur prédéfinie ; et
la commande d'une conduite du véhicule (100) d'après un résultat de la détermination de l'encombrement ou non de la voie d'entrée, dans lequel la commande de la conduite du véhicule (100) comprend en outre la limitation d'une vitesse de déplacement du véhicule (100) lorsque le véhicule (100) s'engage sur la voie d'entrée, en réponse à la détermination que la voie d'entrée est encombrée ;
**caractérisé par**,
la détection des informations de position ou des informations de mouvement de l'obstacle extérieur (200) situé sur la voie latérale, en réponse à la détermination que la voie d'entrée est encombrée après que le véhicule (100) s'engage sur la voie d'entrée,
et la détermination d'une condition de circulation d'une voie latérale d'après les informations de position ou les informations de mouvement de l'obstacle extérieur (200) sur la voie latérale ; et
la commande d'une conduite du véhicule (100) de sorte que le véhicule (100) s'engage sur la voie latérale tout en augmentant la vitesse du véhicule (100) d'après les informations de position ou les informations de mouvement de l'obstacle extérieur (200), telles que détectées lors de la détermination de la condition de circulation de la voie latérale, en réponse à la détermination que la condition de circulation de la voie latérale est fluide.

3. Support de stockage non transitoire lisible par ordinateur stockant des instructions qui, lorsqu'elles sont exécutées par un processeur, amènent le processeur à effectuer le procédé de la revendication 2.
